# EUROPÄISCHE PATENTSCHRIFT

(11) **EP 3 070 396 B1**
(45) Veröffentlichungstag und Bekanntmachung des Hinweises auf die Patenterteilung: **20.12.2017**
(21) Anmeldenummer: 15159091.6
(22) Anmeldetag: 13.03.2015
(51) Int. Cl.: F21V 5/00, F21V 25/00, F21V 23/00, F21V 23/06, G02B 19/00, F21Y 115/10, F21Y 105/10

(54) **Lichtmodul**
LIGHT MODULE
MODULE D'ÉCLAIRAGE

(43) Veröffentlichungstag der Anmeldung: 21.09.2016
(73) Patentinhaber: Lunux GmbH, 30880 Laatzen (DE)
(72) Erfinder: Kerpe, Alexander, 59555 Lippstadt (DE); Möller, Dennis, 59556 Lippstadt (DE)
(74) Vertreter: Jöstingmeier, Martin

(56) Entgegenhaltungen:
- EP-A1- 1 821 030
- EP-A1- 2 317 205
- EP-A1- 2 371 510
- WO-A1-2014/019953
- DE-A1-102009 035 369
- DE-A1-102010 044 471
- DE-A1-102011 107 895
- DE-U1-202013 008 540

## Beschreibung

Die Erfindung betrifft ein Lichtmodul umfassend einen mindestens teilweise abschnittsweise ummantelten Schaltungsträger, welcher mindestens eine an dem Schaltungsträge festgelegte Leuchtdiode als Lichtquelle und mindestens eine der mindestens einen Leuchtdiode zugeordnete Linse zum Formen einer Lichtverteilung aufweist, und umfassend ein an dem Schaltungsträger vorgesehenes elektrisches Anschlussmodul, wobei an dem Schaltungsträger mindestens eine Zuleitung vorgesehen ist zum Verbinden der mindestens einen Leuchtdiode mit dem elektrischen Anschlussmodul. Aus der WO 2007/064701 A1 ist ein Lichtmodul mit einer Platine als Schaltungsträger und einer Mehrzahl von an der Platine beabstandet festgelegten Leuchtdioden als Lichtquellen bekannt. Die Platine weist eine Ummantelung aus einem thermisch leitfähigen Material mit einer Schmelztemperatur von 100° C und einer Thermoleitfähigkeit von 1 W/m²K oder mehr auf. Die Ummantelung ist lokal im Bereich der Leuchtdioden und eines Anschlusskontakts ausgespart beziehungsweise unterbrochen ausgebildet. Eine vollständige Kapselung im Sinne eines Berührungsschutzes beziehungsweise eines Schutzes vor einem Eintrag von Fremdstoffen und Schmutz ist durch die Ummantelung nicht realisiert.

Aus der EP 1 657 758 A1 ist ein Lichtmodul mit einem Schaltungsträger und dran festgelegten Leuchtdioden bekannt. Den Leuchtdioden sind in einem Tauchverfahren aus Silikon hergestellte Einzellinsen zugeordnet. Eine vollständige oder teilweise Ummantelung des Schaltungsträgers, insbesondere aus Silikon, ist nicht offenbart.

EP 1821030 A1 offenbart ein Lichtmodul mit einem Kühlkörper auf dem eine Platine aufliegt. Auf der dem Kühlkörper abgewandten Seite ist die Platine mit LEDs bestückt, die Linsen aufweisen. Die Oberseite der Platine wird mit einer Schutzschicht überzogen, die den Randbereich zwischen der Platine und dem Kühlkörper abdichtet.

EP 2 317 205 A1 beschreibt ein dazu sehr ähnliches Lichtmodul, bei dem jede LED durch eine transparente Abdeckung vor der Hitzeeinwirkung beim Aufbringen der Deckschicht geschützt wird. In der Schutzschicht sind lichtleitende Vorsprünge ausgeformt.

In der EP 2 371 510 A1 wird vorgeschlagen auf eine mit LEDs bestückten Träger eine transparente Kunststoffhaube aufzusetzen, auf die im Anschluss im Spritzgußverfahren ein Linsensystem aufgespritzt wird.

DE 10 2011 107 895 A1 beschreibt ein optoelektronisches Modul mit einem Träger auf dem LEDs sind. Auf dem Träger ist eine Schicht, die Linsen ausbildet. Die Schicht schließt bündig mit dem Rand des Trägers ab, um mehrere Lichtmodule lückenlos aneinander zu reihen.

In der DE 20 2013 0008 540 U1 wird eine Fahrzeugleuchte mit einem Schaltungsträger vorgeschlagen. Der Frontseite des Schaltungsträgers ist u.a. mit LEDs bestückt und von einer die LEDs aufnehmenden Schutzschicht überzogen auf die eine Linse aufgesetzt ist.

Aufgabe der vorliegenden Erfindung ist es, ein Lichtmodul mit einem ummantelten Schaltungsträger in Richtung einer integrierten Funktionseinheit weiter zu entwickeln, welche insbesondere Schutz vor Berührung und Verschmutzung der optoelektrischen Komponenten bietet und eine integrierte Optik bereitstellt.

Zur Lösung der Aufgabe ist die Erfindung in Verbindung mit dem Oberbegriff des Patentanspruchs 1 dadurch gekennzeichnet, dass als Ummantelung für den Schaltungsträger eine Silikonumspritzung vorgesehen ist, wobei die mindestens eine der mindestens einen Leuchtdiode zugeordnete Linse als Teil der Silikonumspritzung hergestellt ist.

Bevorzugt sieht das Lichtmodul zwei oder mehr Leuchtdioden und eine korrespondierenden Anzahl von Linsen vor.

Der besondere Vorteil der Erfindung besteht darin, dass der Schaltungsträger durch die Silikonumspritzung vor allen äußeren Einflüssen geschützt ist und durch die Realisierung der Linsen als Teil der Silikonumspritzung zugleich auf separate Linsen verzichtet werden kann. Die Silikonumspritzung definiert insofern ein einstückiges Linsenarray. Es ergibt sich durch die Silikonumspritzung eine funktionale Integration, welche die Herstellung vereinfacht und den Montageaufwand reduziert. Die Silikonlinsen sind hierbei in einer exakten Positionierung zum Schaltungsträger mit den daran festgehaltenen Leuchtdioden vorgesehen. Einer Fehlpositionierung der Linsen bei der Montage ist insofern wirksam vorgebeugt.

Der Schaltungsträger des Lichtmoduls besteht bevorzugt aus einem wärmeleitfähigen Material. Beispielsweise werden Metallkern-Leiterplatten als Schaltungsträger verwendet. Auf den Schaltungsträger werden die Leuchtdioden bevorzugt aufgelötet. Neben den Leuchtdioden können an dem Schaltungsträger als weitere Funktionskomponenten Temperatur- beziehungsweise Lichtsensoren oder dem Überspannungsschutz dienende Funktionskomponenten vorgesehen sein.

Eine Kontaktierung des Schaltungsträgers mit den darauf vorgesehenen Leuchtdioden und bevorzugt den weiteren Schaltungskomponenten erfolgt insbesondere über das elektrische Anschlussmodul, welches beispielsweise einen an dem Schaltungsträger festgelegten Steckverbinder und eine Mehrzahl von Leitern aufweist, wobei die Leiter zu einem Kabel verbunden sein können und mit dem Steckverbinder kontaktiert sind. Beispielsweise können Leiter des Kabels direkt mit dem Schaltungsträger verbunden sein, insbesondere mittels Löten. Ebenso kann eine gedichtete Steckbuchse vorgesehen werden, in die eine Treiberelektronik mit einem korrespondierenden Gegenstecker eingesetzt werden kann. Auf ein Kabel kann dann verzichtet werden.

Der Schaltungsträger ist im Bereich der Außenseite mit Silikon umspritzt. Insbesondere ist die Silikonumspritzung im Bereich einer Vorderseite des Schaltungsträgers, welche die Leuchtdioden aufweist, im Bereich einer gegenüberliegenden Rückseite und an den die Vorderseite und die Rückseite verbindenden Kantenflächen vorgesehen. Zur Herstellung der Silikonumspritzung wird bevorzugt sogenanntes Flüssig-Silikon (liquid silicone rubber, LSR) verwendet. Die Verarbeitung erfolgt als flüssiges 2-Komponenten-Material in Spritzgießmaschinen. Die flüssige 2-Komponenten-Masse wird in einem Werkzeug der Spritzgießmaschine bei zirka 150°C ausgehärtet. Die Dauer des Härtevorgangs liegt typischerweise zwischen einigen Sekunden und wenigen Minuten, abhängig insbesondere von der Materialmenge und der Materialstärke. Das zur Herstellung der Silikonumspritzung vorzugsweise verwendete Material hat eine Transmission von mehr als 90 % im sichtbaren Spektralbereich, eine Eintrübung (sogenannter Hazewert) von weniger als 4 % im sichtbaren Spektralbereich und eine hohe UV-Beständigkeit. Das Silikon bietet eine hohe Temperaturbeständigkeit auch bei Temperaturen von beispielsweise 150°C und eine hohe elektrische Durchschlagfestigkeit von mehr als 10 kV/mm. Die hohe elektrische Durchschlagfestigkeit sorgt insbesondere für eine gute Isolationseigenschaft der Silikonumspritzung.

Die Wärmeleitfähigkeit der Silikonumspritzung beträgt typischerweise weniger als 1,5 W/m K. Nach einer bevorzugten Ausführungsform der Erfindung ist die Wärmeleitfähigkeit kleiner als 0,5 W/m K. Um gleichwohl eine ausreichende Abfuhr der Wärme zu gewährleisten, ist eine Dicke der Silikonumspritzung insbesondere im Bereich der Rückseite kleiner als 1,5 mm und bevorzugt kleiner als 1 mm. Die geringe Dicke führt zugleich zu einem geringen Materialeinsatz und damit zu geringen Kosten für das Lichtmodul.

Als Leuchtdiode kann beispielsweise eine handelsübliche High Power-LED mit Primäroptik vorgesehen werden. Bevorzugt werden jedoch Leuchtdioden ohne Primäroptik verwendet. Der Leistungsbereich der verwendeten Leuchtdioden liegt typischerweise bei 1 W bis 10 W oder mehr. Durch den Verzicht auf die Primäroptik sind die Leuchtdioden besonders kostengünstig. Zugleich ergibt sich eine hohe optische Güte beziehungsweise Effizienz, da die Silikonlinsen beim Umspritzen der Leuchtdiode wie eine Primäroptik wirken und sich die optischen Eigenschaften der ohne Primäroptik verbauten Leuchtdiode an denen einer Leuchtdiode mit Primäroptik angleichen.

Nach einer Weiterbildung der Erfindung können sogenannte Chip Size-Leuchtdioden verwendet werden, welche nur aus dem Halbleitermaterial, elektrischen Kontaktflächen und einer dünnen Phosphorschicht bestehen und auf eine Primäroptik ebenso verzichten wie auf einen keramischen Träger. Hierdurch reduzieren sich die Kosten der Leuchtdioden weiter. Ein Schutz der Chip Size-Leuchtdioden gegen Umwelteinflüsse wird dann durch die Silikonumspritzung im ausreichenden Maße gewährleistet. Zudem ergibt sich eine vorteilhaft geringe Bauhöhe für das Lichtmodul, so dass insbesondere die Integration in eine Beleuchtungsvorrichtung vereinfacht wird.

Eine Dicke der Silikonumspritzung ist im Bereich der Vorderseite dort, wo keine Linsen ausgeformt sind, bevorzugt kleiner als 1 mm und besonders bevorzugt kleiner oder gleich einer Bauhöhe der Leuchtdioden.

Nach einer bevorzugten Ausführungsform der Erfindung überdeckt die Silikonumspritzung die Leuchtdioden selbst beziehungsweise die an dem Schaltungsträger vorgesehenen Zuleitungen für die Leuchtdioden. Vorteilhaft ergeben sich hierdurch ein Berührungsschutz und ein Schutz vor Verunreinigung der optoelektrischen Funktionskomponenten des Lichtmoduls allein durch die Silikonumspritzung. Auf separate Maßnahmen zur Realisierung einer Kapselung beziehungsweise zum Schutz der optoelektrischen Funktionskomponenten vor Berührung etwa bei der Montage oder im Betrieb kann verzichtet werden. Beispielsweise kann das Lichtmodul selbst als Leuchte verwendet werden. Auf weitere Komponenten, beispielsweise eine Abschlussscheibe oder ein Gehäuse, kann verzichtet werden.

Nach einer Weiterbildung der Erfindung sind der an dem Schaltungsträger festgelegte Steckverbinder des Anschlussmoduls und ein dem Steckverbinder zugewandte Teil des Kabels beziehungsweise der in dem Kabel zusammengefassten Leiter mit umspritzt, wobei das Anschlussmodul beziehungsweise Teile desselben unter einer durch die Silikonumspritzung gebildeten Anschlussabdeckung vorgesehen sind. Vorteilhaft ergibt sich für den Steckverbinder ein Schutz vor unbeabsichtigter Berührung und Verschmutzung. Zudem ist ein mechanischer Schutz realisiert. Als Teil der Anschlussabdeckung kann zudem eine Zugentlastung für das Kabel vorgesehen werden, welche einer unzulässigen mechanischen Belastung des Steckverbinders vorbeugt. Die Silikonumspritzung integriert insofern auch die mechanischen Schnittstellen des Lichtmoduls zu den anderen Komponenten der Beleuchtungsvorrichtung und den Berührschutz für das Anschlussmodul.

Nach einer Weiterbildung der Erfindung sind die als Teil der Silikonumspritzung realisierten Linsen halbschalen-, nieren- beziehungsweise muschelförmig ausgebildet. Vorteilhaft ergibt sich durch die spezifische Ausformung der Linsen eine den speziellen Vorgaben angepasste Lichtverteilung. Insbesondere kann vorgesehen sind, dass die Linsen matrixartig angeordnet sind. Abhängig von der jeweiligen Beleuchtungsaufgabe können beispielsweise die Leuchtdioden und die den Leuchtdioden zugeordneten Linsen in Form einer 10x3-Matrix regelmäßig beabstandet vorgesehen werden. Dabei ist bevorzugt eine einzige Linsen einer einzigen Leuchtdiode zugeordnet.

Nach einer Weiterbildung der Erfindung ist die Silikonumspritzung elastisch ausgebildet. Insbesondere ist eine Elastizität beziehungsweise Härte im Bereich von 60 Shore A bis 80 Shore A realisiert. Hierdurch ergeben sich zum einen gute Eigenschaften für Dichtanwendungen. Zugleich ist eine gute thermische Anbindung des Lichtmoduls beispielsweise an einen Kühlkörper beziehungsweise ein das Lichtmodul aufnehmendes Gehäuse einer Beleuchtungsvorrichtung realisierbar.

Nach einer Weiterbildung der Erfindung sind an dem Schaltungsträger Verbindungsöffnungen vorgesehen, welche mit Silikon ausgespritzt sind. Es ergibt sich durch das Vorsehen der mit Silikon ausgespritzten Verbindungsöffnung eine stoffschlüssige Verbindung einer Vorderseite der Silikonumspritzung mit einer gegenüberliegenden Rückseite derselben. Es wird hierdurch einem Ablösen der Silikonumspritzung vom Schaltungsträger entgegengewirkt. Bevorzugt sind die mit Silikon ausgespritzten Verbindungsöffnungen benachbart zu den Leuchtdioden, insbesondere im Bereich der Silikonlinsen vorgesehen. Bevorzugt ist ein Abstand zwischen den Verbindungsöffnungen und den Leuchtdioden kleiner als 3 mm. Es wird insofern verhindert, dass sich zwischen den als Teil der Silikonumspritzung ausgebildeten Linsen und den Leuchtdioden ein Luftspalt bildet, welcher die optischen Eigenschaften des Lichtmoduls verändert und insbesondere negativ beeinflusst. Ebenso wirken die Verbindungsöffnungen einem Ablösen der Silikonumspritzung im Bereich der Anschlussabdeckung und damit einem Eindringen von Feuchtigkeit und dem Entstehen von Undichtigkeiten entgegen. Die Verbindungsöffnungen sind beispielsweise kreisförmig ausgebildet mit einem Durchmesser von 1 mm oder weniger und verteilt über den Schaltungsträger angeordnet.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Fig. 1: eine perspektivische Ansicht eines Lichtmoduls und eine dem Lichtmodul zugeordnete Abdeckung von einer Vorderseite,
- Fig. 2: das Lichtmodul und die Abdeckung nach Fig. 1 von einer perspektivischen Rückseitenansicht,
- Fig. 3: eine Prinzipdarstellung eines Schaltungsträgers und einer Silikonumspritzung des Lichtmoduls nach Fig. 1,
- Fig. 4: einen Querschnitt durch das Lichtmodul und die Abdeckung nach Fig. 1,
- Fig. 5: einen Querschnitt durch das Lichtmodul und die Abdeckung nach Fig. 4 in einer Montageposition,
- Fig. 6: eine Detailvergrößerung eines Anschlussmoduls des Lichtmoduls vor dem Umspritzen,
- Fig. 7: das Anschlussmodul nach Fig.6 mit einer durch die Silikonumspritzung definierten Anschlussabdeckung,
- Fig. 8: eine Aufsicht auf die Abdeckung,
- Fig. 9: einen Schnitt D-D durch die Abdeckung nach Fig. 8,
- Fig. 10: eine Detailansicht der Silikonumspritzung im Bereich einer Zugentlastung für das Anschlussmodul,
- Fig. 11: eine Detailansicht der korrespondierend gestalteten Dichtungsgeometrie an der Silikonumspritzung und der Abdeckung vor der Montage,
- Fig. 12: eine Detailansicht der Dichtung gemäß Fig. 11 nach der Montage,
- Fig. 13: eine Aufsicht auf eine als Teil der Silikonumspritzung ausgebildeten Linse,
- Fig. 14: einen Schnitt B-B durch die Linse der Silikonumspritzung nach Fig. 13,
- Fig. 15: eine perspektivische Ansicht der Beleuchtungsvorrichtung mit dem Lichtmodul, der Abdeckung und einem das Lichtmodul aufnehmenden Gehäuse und
- Fig. 16: einen Querschnitt durch die Beleuchtungsvorrichtung nach Fig. 15.

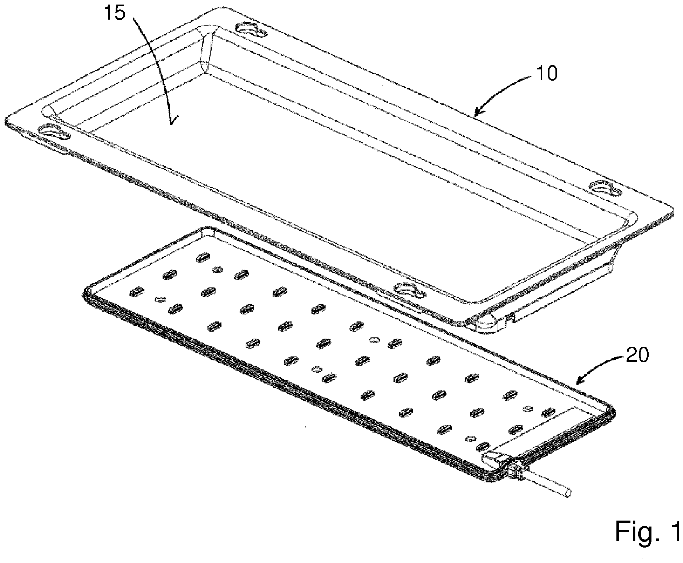

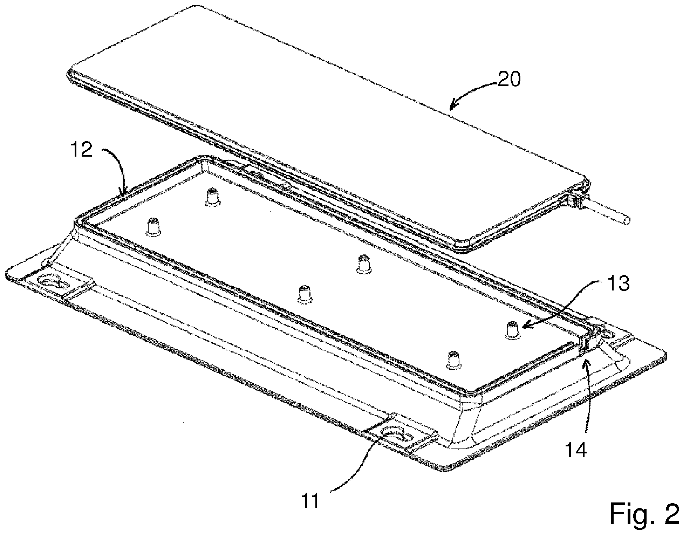

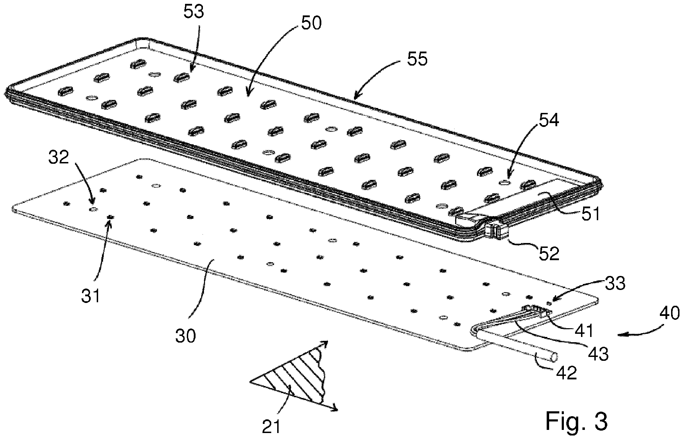

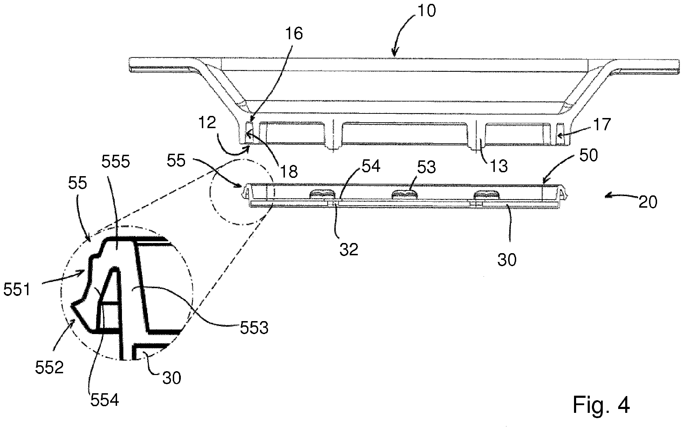

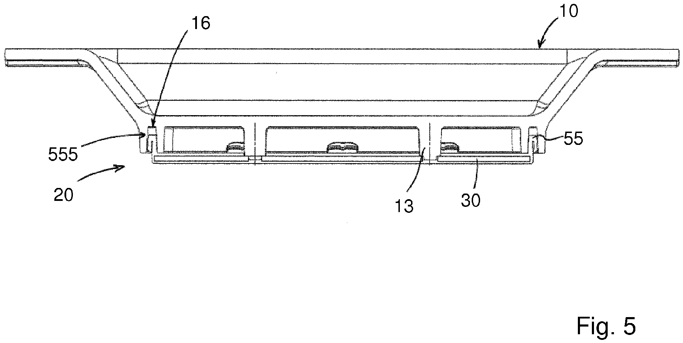

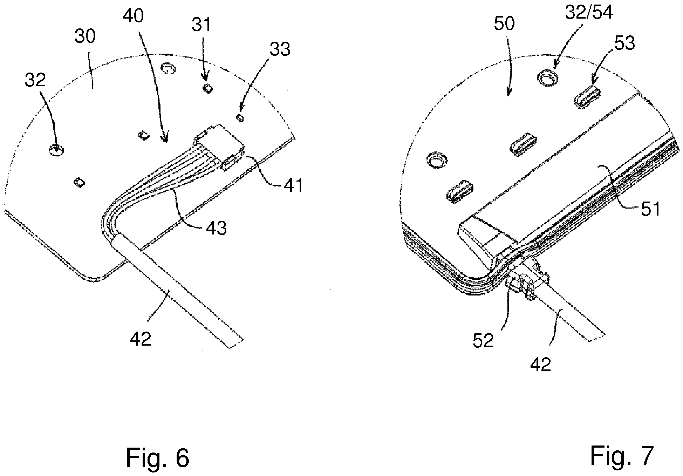

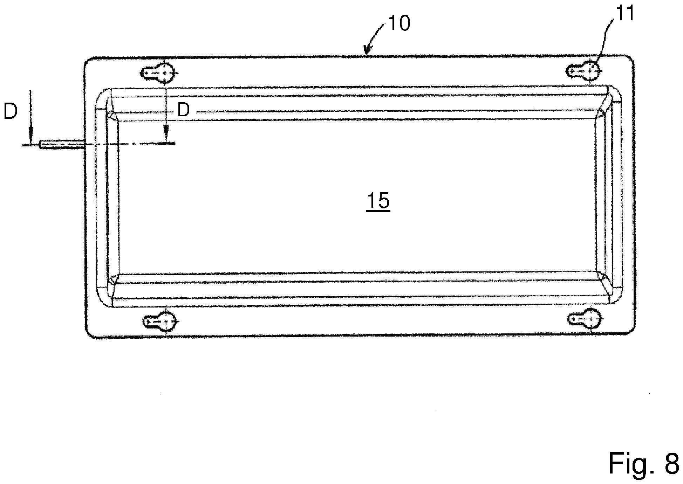

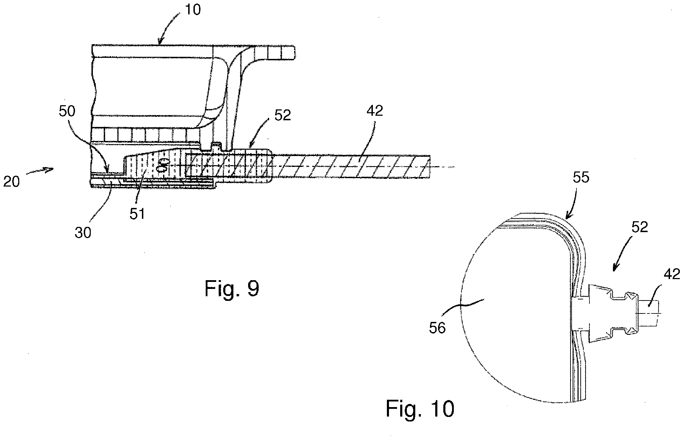

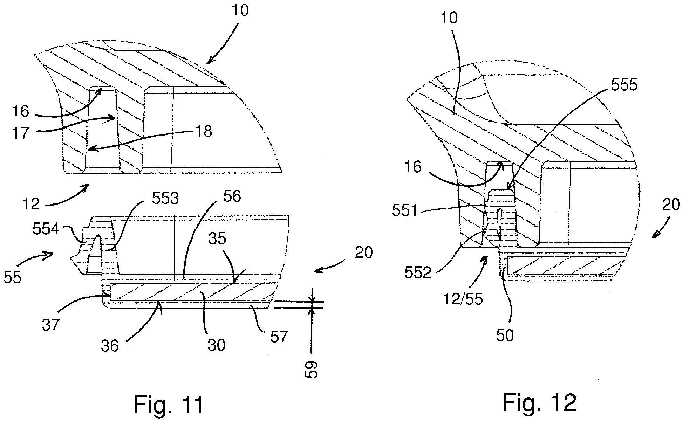

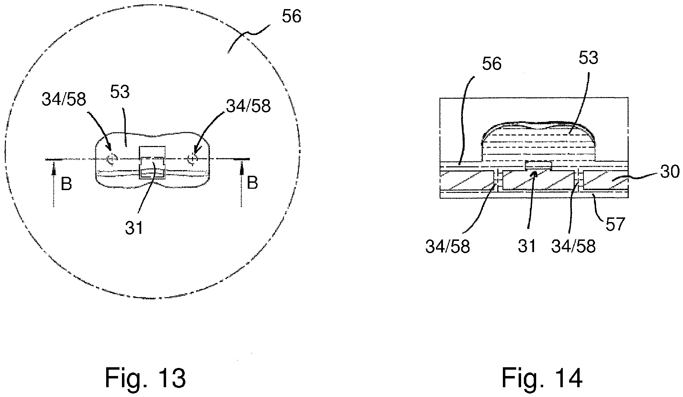

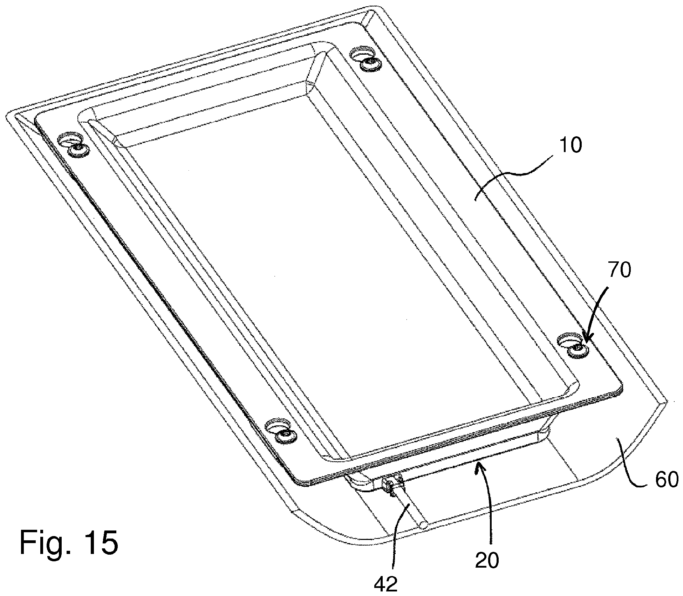

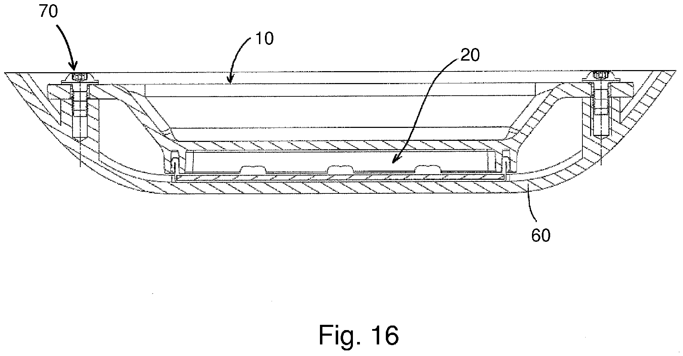

Eine Beleuchtungsvorrichtung nach den Fig. 1 bis 16 umfasst eine Abdeckung 10, ein an die Abdeckung 10 anlegbares Lichtmodul 20 und ein Gehäuse 60, welches aus Metall gebildet ist und zugleich als Kühlkörper dient.

Als weitere, nicht dargestellte Komponente der Beleuchtungsvorrichtung kann nach einem alternativen Ausführungsbeispiel der Erfindung ein an das Lichtmodul 20 anlegbarer, separater Kühlkörper vorgesehen sein, wobei das Gehäuse 60 den Kühlkörper beziehungsweise das Lichtmodul 20 umgreift. Insbesondere kann vorgesehen sein, dass das Gehäuse 60 den Kühlkörper aufnimmt und positioniert und dass der Kühlkörper über das Gehäuse 60 an dem Lichtmodul 20 festgelegt ist.

Die Abdeckung 10 weist eine rechteckige Grundform mit einem umlaufenden Rand auf. Der umlaufende Rand ist im Bereich gegenüberliegenden Längsseiten breiter ausgebildet als im Bereich der die Längsseiten verbindenden Schmalseiten. Im Bereich der Längsseiten sind zueinander beabstandet und gegenüberliegend jeweils zwei Befestigungslöcher 11 vorgesehen zum Festlegen der Abdeckung an dem Gehäuse 60 der Beleuchtungsvorrichtung oder an einem externen Befestigungskörper, beispielsweise einer Verkleidung oder einer Decke. Der Rand umschließt eine muldenförmige Ausnehmung der Abdeckung 10, welche einen im Wesentlichen ebenen und optikfreien transparenten Durchlassabschnitt 15 aufweist. Der transparente Durchlassabschnitt 15 ist auf einer dem Lichtmodul 20 zugewandten Flachseite von einer umlaufenden Nut 12 begrenzt. Zusätzlich ist an der umlaufenden Nut 12 eine Durchbrechung als Kabeldurchführung 14 ausgebildet. Verteilt im Bereich des Durchlassabschnitts 15 sind an der Abdeckung 10 sechs dem Lichtmodul 20 zugewandte Stifte 13 vorgesehen. Beispielsweise ist die Abdeckung aus Glas oder Kunststoff, bevorzugt PMMA, gebildet.

Das Lichtmodul 20 ist in einer Erstreckungsebene 21 flacherstreckt ausgebildet. Die Erstreckungsebene 21 ist durch eine Schaltungsträger 30, beispielsweise eine Platine definiert. An dem Schaltungsträger 30 sind matrixartig verteilt eine Mehrzahl von Leuchtdioden 31 vorgesehen. Die Leuchtdioden 31 sind im montierten Zustand der Beleuchtungsvorrichtung den Durchlassabschnitt 15 der Abdeckung 10 so zugewandt, dass Licht der Leuchtdioden 31 durch den Durchlassabschnitt 15 hindurch abgestrahlt wird. Zusätzlich sind an dem Schaltungsträger 30 verteilt insgesamt sechs Löcher 32 vorgesehen, welche der Aufnahme der an der Abdeckung 10 vorgesehen Stifte 13 dienen und insofern korrespondierend zu den Stiften 13 angeordnet sind. Im Zusammenwirken definieren die Löcher 32 und die Stifte 13 eine relative Position des Lichtmoduls 20 zu der Abdeckung 10. Die Löcher 32 dienen zugleich der Aufnahme und Positionierung des Schaltungsträgers 30 in der Spritzgießmaschine beim Herstellen der Silikonumspritzung 50.

Der Schaltungsträger 30 trägt des Weiteren einen Steckverbinder 41 eines elektrischen Anschlussmoduls 40. Mit dem Steckverbinder 41 verbundene elektrische Leiter 43, welcher zu einem Kabel 42 verbunden sind, dienen der elektrischen Kontaktierung des Lichtmoduls. An dem Schaltungsträger 30 sind ferner nicht dargestellte Zuleitungen zum elektrisch leitenden Verbinden der Leuchtdioden 31 mit dem Steckverbinder 41 vorgesehen. Zudem dient ein an dem Schaltungsträger 30 festgelegter NTC 33 zur Strombegrenzung beziehungsweise als Temperatursensor.

Den Schaltungsträger 30 mit den daran festgelegten Funktionskomponenten umgibt eine Silikonumspritzung 50. Die Silikonumspritzung 50 ist einstückig ausgebildet. Sie erstreckt sich über eine der Abdeckung 10 zugewandte optisch wirksame Vorderseite 35 des Schaltungsträgers 30 ebenso wie über eine zur Anlage des Gehäuses 60 beziehungsweise des Kühlkörpers ausgebildete Rückseite 36 und die Vorderseite 35 mit der Rückseite 36 verbindende Kantenflächen 37 des Schaltungsträges 30. Die Silikonumspritzung 50 realisiert eine Anschlussabdeckung 51 für das elektrische Anschlussmodul 40 mit einer das Kabel 42 umgebene Zugentlastung 52. Die Zugentlastung 52 ist so geformt, dass sie im montierten Zustand in die Kabeldurchführung 14 der Abdeckung 10 eingesetzt und dort formschlüssig festgelegt werden kann. Die Silikonumspritzung 50 definiert zudem die dem Leuchtdioden 31 zugeordneten Linsen 53. Es ist hierbei jeweils eine Linse 53 für jede Leuchtdiode 31 als integraler Bestandteil der Umspritzung 50 aus dem Silikonmaterial hergestellt. Insbesondere können die Leuchtdioden 31 auf eine Primäroptik verzichten. Die Linsen 53 dienen insofern als alleinige Optik. Optional können Optikelemente, beispielsweise eine Linsenstruktur, im Bereich des Durchlassabschnitts 15 der Abdeckung 10 realisiert sein. Optional können den Linsen 53 Reflektoren zugeordnet sein. Ein Reflektoreinsatz kann insofern beispielsweise eine Mehrzahl von Reflektoren bereitstellen.

Eine Aussparung in der Silikonumspritzung 50 ergibt sich allein im Bereich der an dem Schaltungsträger 30 vorgesehen Löcher 32. Die Silikonumspritzung 50 sieht insofern Freiräume 54 vor, welche das Einsetzen der als Teil der Abdeckung 10 realisierten Stifte 13 in die Löcher 32 des Schaltungsträgers 30 erlauben. Ansonsten überdeckt die Silikonumspritzung 50 den Schaltungsträger 30 mit den daran festgelegten Leuchtdioden 31, den Zuleitungen für die Leuchtdioden 31 und dem elektrischen Anschlussmodul 40 vollständig. Die Silikonumspritzung 50 definiert insofern einen Berührungsschutz und ein Kapselung und schützt zudem vor mechanischen Einflüssen beziehungsweise Beschädigung.

Durch das Vorsehen der Aussparung in der Silikonumspritzung 50 und die an dem Schaltungsträger 30 vorgesehenen Löcher 32 kann die Abdeckung 10 mit den daran vorgesehenen, verteilt angeordneten Stiften 13 oder andere Stützstrukturen an dem Lichtmodul 20 abgestützt werden. Es kann insbesondere vorgesehen sein, dass die Klemm- beziehungsweise Stützkräfte über die Stifte 13 übertragen werden, sodass die Dichtung im Bereich der Dichtwulst 55 und der umlaufenden Nut 12 im Wesentlichen kraftfrei erfolgt. Die Stifte 13 sorgen zudem dafür, dass das Lichtmodul 20 beziehungsweise der Schaltungsträger 30 des Lichtmoduls 20 vor einer unerwünschten beziehungsweise unzulässigen Durchbiegung geschützt ist. Zusätzlich kann eine Befestigung mittels einer Verschraubung durch die Löcher 32 realisiert werden.

Eine besonders vorteilhafte Verbindung der Silikonumspritzung 50 mit dem Schaltungsträger 30 ergibt sich durch das Vorsehen von mit Silikon ausgespritzten Verbindungsöffnungen 34 an dem Schaltungsträger 30. Die Verbindungsöffnungen 34 sind insbesondere benachbart zu den Leuchtdioden 31 vorgesehen. Durch das Füllen der Verbindungsöffnung 34 mit dem Silikonmaterial bildet sich ein Steg 58 als Teil der Silikonumspritzung 50, welcher eine der Vorderseite 35 des Schaltungsträgers 30 zugeordnete Vorderseite 56 der Silikonumspritzung 50 mit einer der Rückseite 36 des Schaltungsträgers 30 zugeordneten Rückseite 57 der Silikonumspritzung 50 stoffschlüssig verbindet. Es ergibt sich hierdurch zum einen eine gute, flächige Anlage der Silikonumspritzung 50 an dem Schaltungsträger 30. Zum anderen sind die Linsen 53 bezogen zur Position der Leuchtdioden 31 fixiert.

Als Teil der Silikonumspritzung 50 ist eine dem Schaltungsträger 30 randseitig zugeordnete Dichtwulst 55 vorgesehen, welche in Richtung der Abdeckung 10 abragend ausgestaltet ist. Die Dichtwulst 55 ist in Bezug auf ihre Geometrie angepasst an die Geometrie der Nut 12. Die Dichtwulst 55 ist insbesondere im Querschnitt V-förmig realisiert mit einem der Vorderseite der Umspritzung 50 randseitig zugeordneten Verbindungsschenkel 553 und einem an den Verbindungsschenkel 553 angeformten freien Schenkel 554. In einem Scheitel 555 sind der Verbindungsschenkel 553 und der freie Schenkel 554 verbunden. Die Dichtwulst 55 ist zum einen aufgrund der Materialeigenschaften der Silikonumspritzung 50 und zum anderen durch einen zwischen den Schenkel 553, 554 gebildeten, im Querschnitt v-förmigen Freiraum elastisch verformbar ausgebildet. Die Dichtwulst 55 weist an dem freien Schenkel 554 auf einem dem Verbindungsschenkel 553 abgewandten Außenseite beabstandet zueinander zwei Dichtlippen 551, 552 als Ausformungen auf.

Nach einer alternativen, nicht dargestellten Ausführungsform der Erfindung kann die Dichtwulst 55 beispielsweise U-förmig ausgebildet sein. Beispielsweise kann ein an der Abdeckung 10 vorgesehener Steg in die Ausnehmung der Dichtwulst 55 eingesetzt werden zur Realisierung der Dichtung. Insofern ist das Dichtprinzip konstruktiv umgekehrt realisiert.

Gleiche Bauteile und Bauteilfunktionen sind durch gleiche Bezugszeichen gekennzeichnet.

Beim Ansetzen des Lichtmoduls 20 an die Abdeckung 10 wird die Dichtwulst 55 in die umlaufende Nut 12 der Abdeckung 10 eingesetzt. Es ist hierbei der Scheitel 555 beabstandet zu einem Nutgrund 16 der Nut 12 vorgesehen. Die Schenkel 553, 554 liegen an gegenüberliegenden Nutflanken 17, 18 der Nut 12 an. Die Nutflanken 17, 18 sind zueinander so angestellt, dass die Nut 12 sich in Richtung des Nutgrunds 16 verjüngt und bei der Aufnahme der Dichtwulst 55 die Dichtlippen 551, 552 an einer äußeren Nutflanke 18 der Nut 12 angelegt sind. Es ergibt sich insofern ein definierter Dichtbereich zwischen den Nutflanken 17, 18 und den Schenkeln 553, 554 der Dichtwulst 55. Zudem werden die bei der Montage der Beleuchtungsvorrichtung über die Befestigungslöcher 11 abgestützten Kräfte gleichmäßig und großflächig verteilt, so dass einer unzulässig hohen lokalen Belastung und einer Beschädigung der Dichtwulst 55 beziehungsweise einer Beeinträchtigung der Dichtwirkung vorgebeugt ist.

Im montierten Zustand ist zusätzlich die als Teil der Silikonumspritzung 50 ausgebildete Zugentlastung 52 in die Kabeldurchführung 14 der Abdeckung 10 eingesetzt.

Die Abdeckung 10 wird über eine Mehrzahl von durch die Befestigungslöcher 11 geführten Schrauben 70 mit dem Gehäuse 60 verbunden. Hierbei erfolgt die Zuordnung der Abdeckung 10 zu dem Gehäuse 60 so, dass das Lichtmodul 20 mit der Rückseite 57 der Silikonumspritzung 50 gegen eine Innenseite des Gehäuses 60 gedrückt wird. Die elastische Silikonumspritzung 50, welche im Bereich der Rückseite 57 bevorzugt eine Dicke 59 von maximal 1 mm aufweist, wird zur Realisierung eines guten Wärmetransfers auf das Gehäuse 60 komprimiert. Die Elastizität der Silikonumspritzung 50 begünstigt zugleich die flächige Anlage an dem Gehäuse 60.

Während das Metallgehäuse 60 eine Lebensdauer von beispielsweise 50 Jahren aufweist, beträgt eine Lebensdauer des Lichtmoduls 20 beispielsweise 10 Jahre oder 20 Jahre. Es muss insofern das Lichtmodul 20 während der Lebensdauer des Gehäuses 60 häufiger ausgetauscht werden. Zum Austausch wird das Lichtmodul 20 zusammen mit der Abdeckung 10 aus dem Gehäuse 60 entnommen. Die Demontage des Lichtmoduls 20 kann dann werkzeuglos erfolgen, da die Abdeckung 10 und das Lichtmodul 20 insbesondere über die in die Nut 12 eingesetzte Dichtwulst 55 miteinander verbunden sind. Das Recycling des Lichtmoduls 20 ist hierdurch vereinfacht.

### Bezugszeichenliste

- 10: Abdeckung
- 11: Befestigungsloch
- 12: Nut
- 13: Stift
- 14: Kabeldurchführung
- 15: Durchlassabschnitt
- 16: Nutgrund
- 17: Nutflanke
- 18: Nutflanke
- 20: Lichtmodul
- 21: Erstreckungsebene
- 30: Schaltungsträger
- 31: Leuchtdiode
- 32: Loch
- 33: NTC
- 34: Verbindungsöffnung
- 35: Vorderseite
- 36: Rückseite
- 37: Kantenfläche
- 40: Anschlussmodul
- 41: Steckverbinder
- 42: Kabel
- 43: Leiter
- 50: Silikonumspritzung
- 51: Anschlussabdeckung
- 52: Zugentlastung
- 53: Linse
- 54: Freiraum
- 55: Dichtwulst
- 56: Vorderseite
- 57: Rückseite
- 58: Steg
- 59: Dicke
- 60: Gehäuse
- 70: Schraube
- 551: Dichtlippe
- 552: Dichtlippe
- 553: Verbindungsschenkel
- 554: freier Schenkel
- 555: Scheitel

## Patentansprüche

1. Lichtmodul (20) umfassend einen mindestens teilweise ummantelten Schaltungsträger (30), welcher mindestens eine an dem Schaltungsträger (30) festgelegte Leuchtdiode (31) als Lichtquelle und mindestens eine der mindestens einen Leuchtdiode (31) zugeordnete Linse (53) zum Formen einer Lichtverteilung aufweist, und umfassend ein an dem Schaltungsträger (30) vorgesehenes elektrisches Anschlussmodul (40), wobei an dem Schaltungsträger (30) mindestens eine Zuleitung vorgesehen ist zum Verbinden der mindestens einen Leuchtdiode (31) mit dem elektrischen Anschlussmodul (40), **dadurch gekennzeichnet, dass** als Ummantelung für den Schaltungsträger (30) eine Silikonumspritzung (50) vorgesehen ist, wobei die mindestens eine der mindestens einen Leuchtdiode (31) zugeordnete Linse (53) als Teil der Silikonumspritzung (50) hergestellt ist.

2. Lichtmodul (20) nach Anspruch 1, **dadurch gekennzeichnet, dass** die Silikonumspritzung (50) die mindestens eine Leuchtdiode (31) selbst und/oder die an dem Schaltungsträger (30) vorgesehene mindestens eine Zuleitung für die mindestens eine Leuchtdiode (31) mindestens teilweise überdeckt.

3. Lichtmodul (20) nach Anspruch 1 oder 2, **dadurch gekennzeichnet, dass** das elektrische Anschlussmodul (40) einen an dem Schaltungsträger (30) festgelegten Steckverbinder (41) und ein eine Mehrzahl von Leitern (43) aufweisendes Kabel (42) vorsieht, wobei die Leiter (43) mit dem Steckverbinder (41) kontaktiert sind.

4. Lichtmodul nach einem der Ansprüche 1 bis 3, **dadurch gekennzeichnet, dass** das Anschlussmodul (40) und/oder der an dem Schaltungsträger (30) festgelegte Steckverbinder (41) und/oder ein dem Steckverbinder (41) zugewandter Teil des Kabels (42) und/oder der in dem Kabel (42) zusammengefasste Leiter (43) mit umspritzt sind, wobei das Anschlussmodul (40) und/oder der Steckverbinder (41) und/oder der den Steckverbinder (41) zugewandte Teil des Kabels (42) und/oder der Leiter (43) unter einer Anschlussabdeckung (51) vorgesehen sind, welche als Teil der Silikonumspritzung (50) ausgebildet ist.

5. Lichtmodul (20) nach einem der Ansprüche 1 bis 4, **dadurch gekennzeichnet, dass** die als Teil der Silikonumspritzung (50) ausgebildete mindestens eine Linse (53) muschelförmig und/oder halbschalenförmig ausgeformt ist.

6. Lichtmodul (20) nach einem der Ansprüche 1 bis 5, **dadurch gekennzeichnet, dass** eine Mehrzahl von Leuchtdioden (31) und/oder eine Mehrzahl von Linsen (53) vorgesehen sind, wobei die Leuchtdioden (31) und/oder die Linsen (53) matrixartig angeordnet sind.

7. Lichtmodul (20) nach einem der Ansprüche 1 bis 6, **dadurch gekennzeichnet, dass** die Silikonumspritzung (50) den Schaltungsträger (30) auf einer die mindestens eine Leuchtdiode (31) aufweisenden Vorderseite (35), auf einer der Vorderseite (35) gegenüberliegenden Rückseite (36) und an den Kantenflächen (37) umgibt.

8. Lichtmodul (20) nach einem der Ansprüche 1 bis 7, **dadurch gekennzeichnet, dass** an dem Schaltungsträger (30) mit Silikon ausgespritzte Verbindungsöffnungen (34) vorgesehen sind zum stoffschlüssigen Verbinden einer Vorderseite (56) der Silikonumspritzung (50) mit einer Rückseite (57) derselben.

9. Lichtmodul (20) nach einem der Ansprüche 1 bis 8, **dadurch gekennzeichnet, dass** die Verbindungsöffnungen (34) benachbart zu der mindestens einen Leuchtdiode (31) vorgesehen sind.

10. Lichtmodul (20) nach einem der Ansprüche 1 bis 9, **dadurch gekennzeichnet, dass** eine Dicke (59) der Silikonumspritzung (50) im Bereich der Rückseite (57) kleiner ist als 1,5 mm und bevorzugt kleiner ist als 1 mm.

11. Lichtmodul (20) nach einem der Ansprüche 1 bis 10, **dadurch gekennzeichnet, dass** als Teil der Silikonumspritzung (50) eine umlaufende Dichtwulst (55) vorgesehen ist, wobei die Dichtwulst (55) aus einer durch den Schaltungsträger (30) definierten Erstreckungsebene (21) an einer durch die mindestens eine Leuchtdiode (31) definierten Vorderseite abragt.

12. Lichtmodul (20) nach Anspruch 11, **dadurch gekennzeichnet, dass** die Dichtwulst (55) die mindestens eine Linse (53) rahmenartig umfasst.

13. Leuchtmodul (20) nach einem der Ansprüche 1 bis 12, **dadurch gekennzeichnet, dass** als Teil der Silikonumspritzung (50) eine Zugentlastung (52) für das Kabel (42) und/oder die Leiter (43) des Kabels (42) ausgebildet ist.

14. Lichtmodul (20) nach einem der Ansprüche 1 bis 13, **dadurch gekennzeichnet, dass** die Silikonumspritzung (50) elastisch ausgebildet ist.

## Claims

1. Light module (20) comprising an at least partially covered circuit carrier (30) which has at least one light-emitting diode (31) mounted to the circuit carrier (30) as a light source and at least one lens (53) assigned to the at least one light-emitting diode (31) for forming a light distribution, and comprising an electrical connection module (40) provided on the circuit carrier (30), wherein at least one supply line is provided at the circuit carrier (30) for connecting the at least one light-emitting diode (31) to the electrical connection module (40),
**characterized in that**
a silicone overmolding (50) is provided as cover for the circuit carrier (30), wherein the at least one lens (53) associated with the at least one light-emitting diode (31) is manufactured as part of the silicone overmolding (50).

2. Light module (20) according to claim 1,
**characterized in that**
the silicone overmolding (50) at least partially covers the at least one light-emitting diode (31) itself and/or the at least one supply line provided on the circuit carrier (30) for the at least one light-emitting diode (31).

3. Light module (20) according to claim 1 or 2,
**characterized in that**
the electrical connection module (40) provides a plug connector (41) fixed to the circuit carrier (30) and a cable (42) having a plurality of conductors (43) wherein the conductors (43) are in contact with the plug connector (41).

4. Light module according to one of claims 1 to 3,
**characterized in that**
the connection module (40) and/or the plug connector (41) attached to the circuit carrier (30) and/or a part of the cable (42) facing towards the plug connector (41) and/or the conductor (43) pooled in the cable (42) are also overmolded, wherein the connection module (40) and/or the plug connector (41) and/or the part of the cable (42) facing towards the plug connector (41) and/or the conductor (43) are provided under a connection cover (51), which is formed as part of the silicone overmolding (50).

5. Light module (20) according to one of claims 1 to 4,
**characterized in that**
the at least one lens (53) being formed as part of the silicone overmolding (50) is formed shell-shaped or half-shell-shaped.

6. Light module according to one of claims 1 to 5,
**characterized in that**
a plurality of light-emitting diodes (31) and/or a plurality of lenses (53) are provided, wherein the light-emitting diodes (31) and/or the lenses (53) are arranged in a matrix-like manner.

7. Light module (20) according to one of claims 1 to 6,
**characterized in that**
the silicon overmolding (50) covers the circuit carrier (30) on a front side (35) comprising the at least one light-emitting diode (31), on a rear side (36) being opposite to the front side (35), and on the narrow sides (37).

8. Light module (20) according to one of claims 1 to 7,
**characterized in that**
the circuit carrier (30) has through holes being filled with silicone for bindingly connecting a front side (56) of the silicone overmolding (50) with a rear side (57) of the same.

9. Light module (20) according to one of claims 1 to 8,
**characterized in that**
the through holes (34) are provided adjacent to the at least one light-emitting diode (31).

10. Light module (20) according to one of claims 1 to 9,
**characterized in that**
a thickness (59) of the silicone overmolding (50) is less than 1.5 mm and preferably less than 1 mm in the region of the rear side (57).

11. Light module (20) according to one of claims 1 to 10,
**characterized in that**
a peripheral sealing bead (55) is provided as part of the silicone overmolding (50), wherein the sealing bead (55) protrudes of an extension plane (21) defined by the circuit carrier (30) on a front side defined by the at least one light-emitting diode (31).

12. Light module (20) according to claim 11,
**characterized in that**
the sealing bead (55) surrounds the at least one lens (53) in a frame-like manner.

13. Light module (20) according to one of claims 1 to 12,
**characterized in that**
a strain relief (52) for the cable (42) and/or the conductors (43) of the cable (42) is formed as part of the silicone overmolding (50).

14. Light module (20) according to one of claims 1 to 13,
**characterized in that**
the silicone overmolding (50) is formed elastically.

## Revendications

1. Module lumineux (20) comprenant une carte de circuits (30) au moins partiellement enveloppée, présentant au moins une diode électroluminescente (31) fixée à la carte de circuits (30) et servant de source lumineuse et au moins une lentille (53) associée à l'au moins une diode électroluminescente (31) et destinée à former une répartition de la lumière, et comprenant un module de branchement électrique (40) prévu sur la carte de circuits (30), au moins une ligne d'entrée étant prévue sur carte de circuits (30) pour relier l'au moins une diode électroluminescente (31) au module de raccordement électrique (40), **caractérisé en ce que** l'enveloppe prévue pour la carte de circuits (30) est un enrobage en silicone injecté (50), l'au moins une lentille (53) associée à l'au moins une diode électroluminescente (31) étant fabriquée comme une partie de l'enrobage en silicone injecté (50).

2. Module lumineux (20) selon la revendication 1, **caractérisé en ce que** l'enrobage en silicone injecté (50) recouvre au moins partiellement l'au moins une diode électroluminescente (31) elle-même et/ou l'au moins une ligne d'entrée prévue sur la carte de circuits (30) pour l'au moins une diode électroluminescente (31).

3. Module lumineux (20) selon la revendication 1 ou 2, **caractérisé en ce que** le module de raccordement électrique (40) prévoit un connecteur enfichable (41) fixé sur la carte de circuits (30) et un câble (42) comportant plusieurs conducteurs (43), lesquels conducteurs (43) sont mis en contact avec le connecteur enfichable (41).

4. Module lumineux selon l'une des revendications 1 à 3, **caractérisé en ce que** le module de raccordement (40) et/ou le connecteur enfichable (41) fixé sur la carte de circuits (30) et/ou une partie du câble (42) et/ou des conducteurs (43) regroupés dans le câble (42) orientée vers le connecteur enfichable (41) sont enrobés ensemble, le module de raccordement (40) et/ou le connecteur enfichable (41) et/ou la partie du câble (42) et/ou des conducteurs (43) regroupés dans le câble (42) orientée vers le connecteur enfichable (41) étant prévus sous une couverture de branchement (51) formée comme une partie de l'enrobage en silicone injecté (50).

5. Module lumineux (20) selon l'une des revendications 1 à 4, **caractérisé en ce que** l'au moins une lentille (53) formée comme une partie de l'enrobage en silicone injecté (50) est en forme de coquille et/ou en forme de demi-coque.

6. Module lumineux (20) selon l'une des revendications 1 à 5, **caractérisé en ce que** plusieurs diodes électroluminescentes (31) et/ou plusieurs lentilles (53) sont prévues, les diodes électroluminescentes (31) et/ou les lentilles (53) étant disposées pour former une matrice.

7. Module lumineux (20) selon l'une des revendications 1 à 6, **caractérisé en ce que** l'enrobage en silicone injecté (50) entoure la carte de circuits (30) sur une face antérieure (35) présentant l'au moins une diode électroluminescente (31), sur une face postérieure (36) opposée à la face antérieure (35) et sur les surfaces d'arête (37).

8. Module lumineux (20) selon l'une des revendications 1 à 7, **caractérisé en ce que** des ouvertures de liaison (34) enrobées de silicone sont prévues sur la carte de circuits (30) pour la liaison en solidarité de matière d'une face antérieure (56) de l'enrobage en silicone injecté (50) avec une face postérieure (57) de celui-ci.

9. Module lumineux (20) selon l'une des revendications 1 à 8, **caractérisé en ce que** les ouvertures de liaison (34) sont prévues au voisinage de l'au moins une diode électroluminescente (31).

10. Module lumineux (20) selon l'une des revendications 1 à 9, **caractérisé en ce qu'**une épaisseur (59) de l'enrobage en silicone injecté (50) au niveau de la face postérieure (57) est plus petite que 1,5 mm et de préférence plus petite que 1 mm.

11. Module lumineux (20) selon l'une des revendications 1 à 10, **caractérisée en ce qu'**il est prévu dans l'enrobage en silicone injecté (50) un bourrelet d'étanchéité (55) périphérique, lequel bourrelet d'étanchéité (55) dépasse d'un plan d'étendue (21) défini par la carte de circuits (30) sur une face antérieure définie par l'au moins une diode électroluminescente (31).

12. Module lumineux (20) selon la revendication 11, **caractérisé en ce que** le bourrelet d'étanchéité (55) entoure l'au moins une lentille (53) à la manière d'un cadre.

13. Module lumineux (20) selon l'une des revendications 1 à 12, **caractérisé en ce qu'**une décharge de traction (52) est formée dans l'enrobage en silicone injecté (50) pour le câble (42) et/ou les conducteurs (43) du câble (42).

14. Module lumineux (20) selon l'une des revendications 1 à 13, **caractérisé en ce que** l'enrobage en silicone injecté (50) est élastique.
